# EUROPÄISCHE PATENTSCHRIFT

(11) **EP 3 932 188 B1**
(45) Veröffentlichungstag und Bekanntmachung des Hinweises auf die Patenterteilung: **27.03.2024**
(21) Anmeldenummer: 21020329.5
(22) Anmeldetag: 24.06.2021
(51) Int. Cl.: A01G 25/00, B05B 15/00, A62C 31/00, A62C 3/00

(54) **VORRICHTUNG ZUR FLÜSSIGKEITSVERTEILUNG**
DEVICE FOR DISTRIBUTING LIQUID
DISPOSITIF DE DISTRIBUTION DE LIQUIDE

(30) Priorität: 30.06.2020 DE 202020103781 U
(43) Veröffentlichungstag der Anmeldung: 05.01.2022
(73) Patentinhaber: Fettweis, Herbert, 40489 Düsseldorf (DE)
(72) Erfinder: Fettweis, Herbert, 40489 Düsseldorf (DE)
(74) Vertreter: Janke Scholl Patentanwälte PartG mbB

(56) Entgegenhaltungen:
- US-A1- 2013 062 080
- US-A1- 2017 113 079

## Beschreibung

Die Erfindung betrifft eine Vorrichtung zur Flüssigkeitsverteilung, mit einer um eine vertikale Achse dreh- oder schwenkbaren Sprühdüse, einem zu der Sprühdüse führenden, einen Flüssigkeitskanal für die Flüssigkeitsversorgung der Sprühdüse umschließenden, vertikalen Zulaufrohr, einem mit dem Zulaufrohr verbindbaren Anschluss, welcher zur flüssigkeitsdichten Kopplung mit einem Feuerwehrschlauch ausgebildet ist, und einem Gestell aus gegen das Zulaufrohr abgestützten Streben.

Eine Vorrichtung zur Flüssigkeitsverteilung in Form einer Beregnungsmaschine ist ein in der Landwirtschaft und im Gartenbau weit verbreitetes Mittel zur rationellen Beregnung größerer Freilandflächen. Hierbei wird Wasser über eine Pumpe unter Druck gesetzt und über einen Schlauch oder über modulare Rohre zur eigentlichen Beregnungsmaschine befördert, wobei das Wasser über eine Sprühdüse austritt. Der erzeugte Wasserstrahl wird durch einen Ablenkhebel periodisch gebrochen. Zum einen wird so der recht kompakte Wasserstrahl zur vollständigen Verteilung über die zu beregnende Fläche verteilt, zum anderen wird aber auch durch einen Mechanismus vom auf den Ablenkhebel auftreffenden Wasserstrahl die Wurfrichtung der Sprühdüse um einen gewissen Winkel, über ein Kreissegment hin- und her streichend, verändert. Solche Vorrichtungen sind z. B. aus der US 7,182,275 und der US 5,836,516 bekannt.

Das Dokument US 2013/0062080 A1 zeigt einen Flüssigkeitsverteiler mit einem Dreibeinstativ.

Zum Löschen eines Brandes werden nach wie vor entsprechende Löschdüsen verwendet, die unmittelbar oder mittelbar am Ende eines Feuerwehrschlauches angebracht werden. Durch die Löschdüse wird das Wasser in Form eines Strahls, bzw. in Kegelform auf das zu löschende Objekt abgegeben. Nachteilig ist, dass für die Bedienung einer Löschdüse mindestens eine Bedienperson benötigt wird. Ferner wird durch die aus dem Stand der Technik bekannten Löschdüsen nur ein kleiner Bereich stark benässt, so dass Löschdüsen hauptsächlich als Reaktion auf einen Bereits ausgebrochenen Brand verwendet werden, um diesen punktuell zu bekämpfen.

Präventivmaßnahmen durch die ein Brand bereits im Vorfeld vermieden werden soll, sind in Form eines Sprühdüsenschlauchs aus der EP 1 773 501 B bekannt. Die Sprühdüsenschläuche bestehen aus klassischen Feuerwehrschläuchen, wobei sie eine Vielzahl von Sprühdüsen an ihren Außenseiten aufweisen, durch die das Wasser austreten kann. Als Folge dessen findet eine Benässung entlang des Sprühdüsenschlauches statt.

Die **Aufgabe** der Erfindung besteht darin, durch konstruktive Maßnahmen eine aus der landwirtschaftlichen Nutzung bekannte Vorrichtung zur Verteilung von Flüssigkeit dahingehend weiterzuentwickeln, dass diese optional auch in Reihe schaltbar ist, um so eine großflächige Benässung zu ermöglichen. Zusätzlich soll Wert auf eine kompakte und durch wenige Bauteile unaufwändige Konstruktion gelegt werden.

Zur Lös u n g der Aufgabe wird eine Vorrichtung zur Flüssigkeitsverteilung mit den eingangs genannten Merkmalen vorgeschlagen, die mit einer erste Strebe des Gestells in einer ersten Richtung gegen das Zulaufrohr abgestützt ist, mit einer zweiten Strebe des Gestells in einer zweiten Richtung, welche entgegengesetzt der ersten Richtung ist, gegen das Zulaufrohr abgestützt ist, und wobei die Strömungsachse des Anschlusses horizontal in einer Achsrichtung quer zu der ersten und der zweiten Richtung verläuft und weitere, in andere Richtungen stützende Streben nicht vorhanden sind.

Mit der erfindungsgemäßen Vorrichtung zur Flüssigkeitsverteilung wird eine in ihrer Löschleistung pro Fläche optimierte und trotzdem einfache und aus wenigen Bauteilen bestehende Löschvorrichtung vorgeschlagen. Insbesondere ist die Vorrichtung zur Flüssigkeitsverteilung dazu ausgebildet, mit weiteren, gleichartigen Vorrichtungen in Reihe geschaltet zu werden, um ein möglichst großes Gebiet zu benässen. Somit eignet sich die Vorrichtung sowohl zur Brandprävention, als auch zur Benässung von landwirtschaftlich genutzten Flächen.

Die Vorrichtung kommt mit nur zwei Streben aus. Die Stabilisierung quer zu den beiden Streben wird durch den angeschlossenen, in Betrieb unter Wasserdruck stehenden Feuerwehrschlauch erreicht. Denn dieser nimmt im Druckzustand einen relativ biegefesten Zustand ein, wohingegen das Schlauchmaterial von Feuerwehrschläuchen in ihrem drucklosem Zustand biegeschlaff ist, also keinerlei Stützfunktion übernehmen kann.

Um auch eine Reihenschaltung und eine nochmals bessere Stabilisierung der Vorrichtung zu ermöglichen, ist die Vorrichtung mit einem zweiten, zur flüssigkeitsdichten Kupplung mit einem weiteren Feuerwehrschlauch ausgebildeten Anschluss versehen, welcher identisch zu dem Anschluss gestaltet, mit dem Anschluss strömungsverbunden und diesem abgewandt angeordnet ist. Vorzugsweise fluchten die Strömungsachsen der beiden Anschlüsse zueinander.

Mit anderen Worten ist der vertikal verlaufende Teil des Zulaufrohres an seinem unteren Abschnitt mit einem T-Stück versehen und strömungstechnisch verbunden, an dessen horizontal verlaufenden Enden die zwei entgegengesetzt zueinander angeordneten Enden der Anschlüsse ausgebildet sind.

Somit ist es möglich, die Vorrichtung zur Flüssigkeitsverteilung mit einem handelsüblichen Feuerwehrschlauch zu verbinden, der die Vorrichtung mit unter Druck stehendem Wasser ausgehend von einer Pumpe versorgt. An den weiteren Anschluss lässt sich ein weiterer Feuerwehrschlauch anschließen, der zu einer zweiten Vorrichtung zur Flüssigkeitsverteilung führt. Die Vorrichtungen sind so dimensioniert, dass eine Reihenschaltung von bis zu zehn Löschvorrichtungen möglich ist, bevor die Druckreduzierung durch weitere Vorrichtungen den Wirkungsgrad jeder einzelnen Vorrichtung reduziert.

Vorzugsweise ist ein Ventil zum wahlweisen Öffnen oder Sperren des Flüssigkeitskanals ausgebildet, wobei das Ventil Bestandteil des vertikalen Zulaufrohrs ist. Das Ventil ermöglicht eine einfache Aktivierung oder Deaktivierung der Vorrichtung. Befinden sich die Vorrichtungen in einer Reihenschaltung, hat die Deaktivierung keine Auswirkungen auf die folgenden Vorrichtungen, da das Ventil nur den Zugang zur Sprühdüse blockiert, nicht aber die Strömungsverbindung zwischen den beiden Anschlüssen.

Vorzugsweise ist das Zulaufrohr an einer Basis angeordnet, wobei bevorzugt das Zulaufrohr seitlich verschwenkbar auf der Basis in Bezug auf die Strömungsachse des oder der Anschlüsse gelagert ist.

Bevorzugt ist die Basis als Platte mit einer Oberseite und Unterseite ausgebildet, wobei auf der Oberseite zwei Lagerungen mit Öffnungen koaxial zu der Strömungsachse ausgebildet sind. Anders ausgerückt ist in den Öffnungen, die fest mit der Basis verbunden sind, der horizontale Abschnitt des T-Stücks des unteren Abschnitts des Zulaufrohrs schwenkbar gelagert.

Die Basis bildet mir ihrer Unterseite die Auflagefläche zwischen Vorrichtung und Boden. Ist der Boden abschüssig, bzw. geneigt, kann das Zulaufrohr dank der Lagerung zumindest bei Neigungen quer zur Strömungsrichtung ausgerichtet werden. Ferner sind somit auch andere Neigungswinkel, abweichend von einer lotrechten Ausrichtung des Zulaufrohrs möglich.

Vorzugsweise ist die Vorrichtung mit Klemm- oder Arretiermittel ausgebildet, die dazu ausgebildet sind, das schwenkbare Zulaufrohr gegenüber der Basis festzulegen. Somit ist es möglich, nach korrekter Einstellung der Position des Zulaufrohres gegenüber der Basis, das Zulaufrohr gegenüber der Basis zu verspannen.

Um ein Wegklappen der schwenkbar an dem Zulaufrohr gelagerten Streben zu vermeiden, ist vorzugsweise zur Schwenkbegrenzung der Streben ein Seil oder eine Kette einerseits an der jeweiligen Strebe, und andererseits an mindestens einer Aufhängung an der Basis befestigt. Somit ist ein zu weites Aufklappen der Stützen und damit ein Wegkippen der Vorrichtung quer zur Strömungsachse im Regelfall nicht möglich.

Ist die Vorrichtung in Betrieb, sind die Feuerwehrschläuche mit unter Druck stehendem Wasser gefüllt, sodass sie eine geradlinige und nahezu ausgesteifte Form annehmen. Indem die Feuerwehrschläuche durch Kupplungselemente an den Anschlüssen fest mit der Vorrichtung verbunden sind, stabilisieren sie die Vorrichtung in Richtung der Strömungsachse und ersetzen somit ein weiteres Paar an Stützen, um die Vorrichtung in der Vertikalen zu fixieren.

Bevorzugt sind die Streben an ihren dem Zulaufrohr abgewandten Enden mit verbreiterten Stützfüßen versehen, mit denen die nötige Querstabilität weiter erhöht wird und ein Eingraben der Stützen in den Untergrund vermieden wird.

Vorzugsweise sind die Streben durch ein weiteres Klemm- oder Arretiermittel in ihrer Schwenkstellung fixiert. Durch diese Fixierung ist ein Zurückschwenken der Streben und eine einhergehende Reduzierung des Winkels, der sich zwischen den Streben und dem Zulaufrohr bildet, ausgeschlossen. Dies birgt den Vorteil, dass sich in günstigen Fällen eine nicht im Betrieb befindliche und umgefallene Vorrichtung bei Inbetriebnahme, Aufgrund der anwachsenden Gewichtskraft der Feuerwehrschläuche, selbst aufrichtet.

Um ferner ein Verkeilen und ein Umkippen der Vorrichtung bis zu dem Zeitpunkt zu vermeiden, zu dem sich der volle Druck in dem angeschlossenen Feuerwehrschlauch aufgebaut hat, verlaufen die Unterseiten der Stützfüße vorzugsweise in Richtung parallel zu der Strömungsachse schlittenförmig, mit einem Mittelabschnitt, der zu den Enden hin in nach oben gebogene Endabschnitten übergeht Bevorzugt verläuft auch die Unterseite der Basis, in Richtung parallel zu der Strömungsachse, schlittenförmig und ist mit einem Mittelabschnitt versehen, der zu den Enden hin in nach oben gebogene Endabschnitte übergeht.

Durch die schlittenartige Gestaltung der Auflageflächen der Vorrichtung gegenüber dem Untergrund wird ermöglicht, dass bei Auftretenden von Querkräften durch nicht gerade verlegte oder verdrehte Schläuche bei Inbetriebnahme, die Vorrichtung einfach verrutschen kann, ohne sich im Untergrund zu verkanten.

Um die Vorrichtung für den Transport oder zur Lagerung platzsparend auszubilden, ist vorzugsweise eine auf dem Zulaufrohr höhenbeweglich angeordnete Hülse angeordnet, gegen die die erste und zweite Strebe mit jeweils einem Ende abgestützt, und an der die Streben in der Vertikalen schwenkbar gelagert sind. Ferner bevorzugt ist ein Klemm- oder Arretiermittel zum Fixieren der Höhe der Hülse am Zulaufrohr.

Die justierbare Hülse bietet den Vorteil, dass die Hülse bei der Deinstallation der Vorrichtung gelöst und in Richtung der Sprühdüse verschoben werden kann. Die Vorrichtung ist dabei so ausgebildet, dass sich die erste und zweite Strebe bis parallel zu dem Zulaufrohr schwenken lassen und potentiell mit den Stützfüßen nicht über das Niveau der Basis hinausragen. Somit ist durch die Hülse unter anderem auch die Reduzierung der Gesamtlänge der Vorrichtung möglich.

Um den Raumbedarf der Vorrichtung beim Transport oder der Lagerung zu minimieren, weisen die Streben in einer alternativen Ausführungsform im Bereich der Anschlüsse einen teilkreisförmigen Abschnitt auf, wobei die Streben mit ihren zu dem Zulaufrohr ausgebildeten Innenseiten konkav bzw. komplementär zu dem horizontalen Abschnitt des T-Stücks des Zulaufrohrs ausgebildet sind und sich so im eingeschwenkten Zustand um das Zulaufrohr schmiegen. Um ein Anschmiegen der Streben an das Zulaufrohr zu ermöglichen, ist neben der Formänderung der Streben, auch eine Anpassung der Basis notwendig. Dazu sind im Schwenkbereich der Streben komplementäre Aussparungen in der Basis ausgebildet, sodass die Streben nicht durch die Basis in ihrem Schwenkbereich limitiert werden.

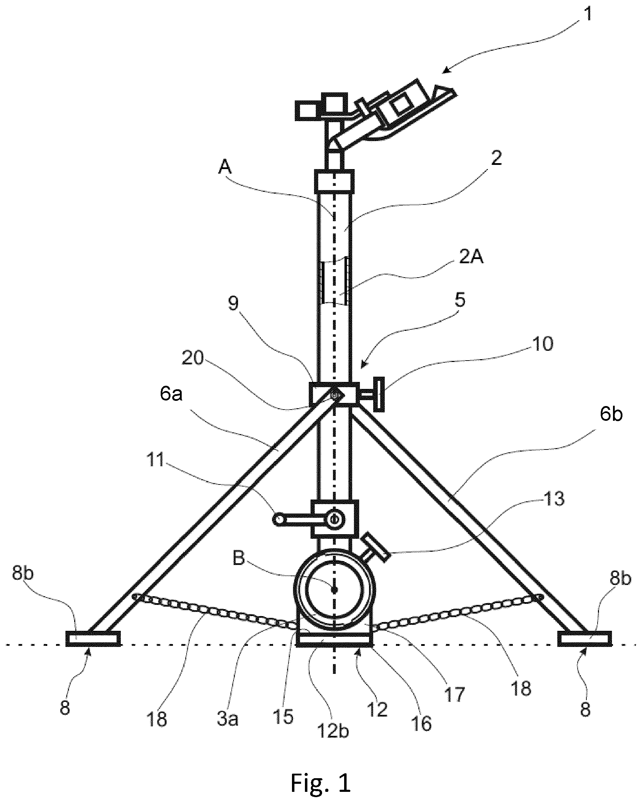

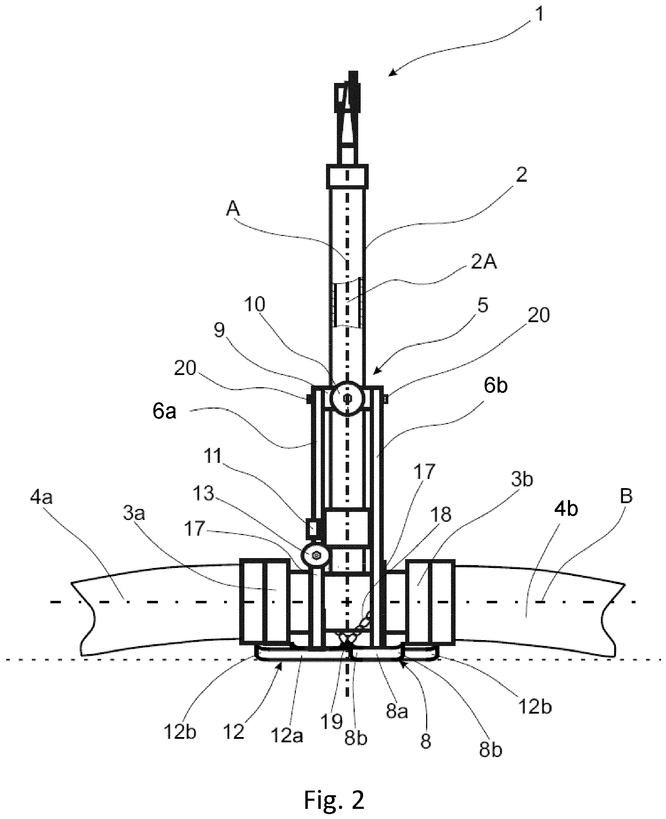

Weitere Maßnahmen werden nachstehend gemeinsam mit der Beschreibung eines bevorzugten Ausführungsbeispiels und anhand der Figuren 1 und 2 näher erläutert. Dabei zeigt
- Fig. 1: eine schematische Seitenansicht einer Vorrichtung zur Flüssigkeitsverteilung; und
- Fig. 2: eine schematische Frontansicht der Vorrichtung zur Flüssigkeitsverteilung.

Die Figur 1 zeigt die Vorrichtung zur Flüssigkeitsverteilung, die mit einer um eine vertikale Achse A dreh- oder schwenkbaren Sprühdüse 1 ausgebildet ist. Weitere Bestandteile der Vorrichtung sind ein zu der Sprühdüse 1 führendes, einen Flüssigkeitskanal 2A für die Flüssigkeitsversorgung der Sprühdüse 1 umschließendes, vertikales Zulaufrohr 2 und ein mit dem Zulaufrohr 2 unter einem rechten Winkel verbundener Anschluss 3a, welcher zur flüssigkeitsdichten Kupplung mit einem in Figur 2 dargestellten Feuerwehrschlauch 4a vorgesehen ist. Die Strömungsachse B des Anschlusses 3a verläuft horizontal und in Bodennähe.

Das vertikale Zulaufrohr 2 ist durch ein Gestell 5 bestehend unter anderem aus zwei gegen das Zulaufrohr 2 schräg abgestützten Streben 6a,6b gegen Umfallen gesichert. Eine erste Strebe 6a des Gestells 5 ist in einer ersten Richtung gegen das Zulaufrohr 2 abgestützt, und eine zweite Strebe 6b des Gestells 5 ist in einer zweiten Richtung gegen das Zulaufrohr abgestützt, die genau entgegengesetzt der ersten Richtung ist. Die sich so gegenüberliegenden Streben 6a,6b verlaufen quer zu der horizontalen Strömungsachse B des Anschlusses 3a. Weitere, in andere Richtungen stützende Streben sind nicht vorhanden, da nicht erforderlich.

Die erste und die zweite Strebe 6a,6b sind an ihren dem Zulaufrohr 2 abgewandten Enden jeweils mit verbreiterten Stützfüßen 8 ausgebildet. Gemäß Figur 2 kann die Unterseite der Stützfüße 8 in Richtung parallel zu der Strömungsachse B schlittenförmig verlaufen, mit einem Mittelabschnitt 8a, der zu beiden Enden hin in nach oben gebogene Endabschnitte 8b übergeht. Die Stützfüße 8 erlauben eine sichere Abstützung auf weniger festen Untergrund.

Insbesondere ist eine höhenbeweglich angeordnete Hülse 9 auf dem Zulaufrohr 2 gelagert, gegen die die erste und zweite Strebe 6a,6b mit jeweils einem Ende abgestützt ist, und an der die Streben 6a,6b so gelagert sind, dass sie in der Vertikalen schwenkbar sind. Zum Fixieren der Höhe der Hülse 9 am Zulaufrohr 2 ist an der Hülse 9 ein Klemm- oder Arretiermittel 10 in Form einer Spannschraube vorgesehen. Allerdings sind auch andere Ausführungsformen eines Klemm- oder Arretiermittels möglich, beispielsweise in Form eines Hebels.

Zur Schwenkbegrenzung der schrägen Streben 6a,6b bei deren Aufspreizen ist ein Seil oder eine Kette 18 einerseits an der jeweiligen Strebe 6a,6b, und andererseits an einer Aufhängung 19 an einer Basis 12 der Vorrichtung befestigt. Alternativ kann das Seil oder die Kette 18 auch mehrteilig ausgebildet sein, wobei beispielsweise auch die Aufhängung 19 mehrteilig ausgebildet sein kann. Alternativ kann auch ein starres Element die Streben 6a,6b so an dem Zulaufrohr 2 festlegen, dass sich die Streben 6a, 6b nicht über ein maximales Maß hinaus aufspreizen können.

Ferner können die Streben 6a,6b durch ein weiteres Klemm- oder Arretiermittel 20 in ihrer Schwenkstellung fixiert sein, und werden somit am Verschwenken gehindert, sodass die Streben 6a,6b der Vorrichtung ausreichend Halt gegenüber Querkräften bieten und einen stabilen Stand im Betrieb ermöglichen.

Figur 2 zeigt eine Frontansicht der Vorrichtung zur Flüssigkeitsverteilung, wobei das Zulaufrohr 2 auf der Basis 12, die sich unterhalb des Zulaufrohres erstreckt, angeordnet ist.

Ferner offenbart Figur 2 einen zweiten, zur flüssigkeitsdichten Kupplung mit einem weiteren Feuerwehrschlauch 4b ausgebildeten Anschluss 3b, welcher identisch zu dem Anschluss 3a gestaltet ist, mit dem Anschluss 3a dauerhaft strömungsverbunden und diesem abgewandt an der Vorrichtung angeordnet ist. Die beiden Anschlüsse 3a,3b sind so ausgebildet, dass die Strömungsachsen B beider Anschlüsse 3a,3b zueinander fluchten, so dass sich die von dem Wasserdruck in den zwei Feuerwehrschläuchen 4a, 4b ausgeübten Kräfte neutralisieren.

Im unteren Abschnitt des Zulaufrohrs 2 ist nahe der Verbindung zu den beiden Anschlüssen 3a,3b ein Ventil 11 am Zulaufrohr 2 angeordnet, und zum wahlweisen Öffnen oder Sperren des in dem Zulaufrohr 2 verlaufenden Flüssigkeitskanals 2A ausgebildet.

Die Vorrichtung kommt mit nur zwei Streben 6a,6b aus. Die Stabilisierung der Vorrichtung quer zu den beiden Streben wird durch die angeschlossenen, im Betrieb unter Wasserdruck stehenden Feuerwehrschläuche 4a,4b erreicht, da diese dann einen relativ biegefesten Druckzustand einnehmen, wobei sich die Druckkräfte auf die Vorrichtung neutralisieren.

Die Basis 12 ist als eine Platte mit einer Oberseite 15 und einer Unterseite 16 ausgebildet, wobei auf der Oberseite 15 zwei Lagerungen 17 mit Öffnungen koaxial zu der Strömungsachse B ausgebildet sind. Die Öffnungen sind komplementär zu den horizontalen Abschnitten des am unten Bereich des Zulaufrohrs 2 in T-Form anschließenden Bereichs ausgebildet. Mithin ist das Zulaufrohr 2 seitlich schwenkbar auf der Basis 12 in Bezug auf die Strömungsachse B des oder der Anschlüsse 3a,3b gelagert. Ein Klemm- oder Arretiermittel 13 ist dazu ausgebildet, die Schwenkposition des Zulaufrohrs 2 gegenüber der Basis 12 festzulegen. Auch hier handelt es sich um ein Spannschraube, wobei auch andere Ausführungsformen möglich sind, beispielsweise in Form eines Hebels.

Ähnlich wie bei den Stützfüßen 8 verläuft die Unterseite der Basis 12 in Richtung parallel zu der Strömungsachse B schlittenförmig, wobei ein Mittelabschnitt 8a zu den Enden hin in nach oben gebogene Endabschnitte 8b übergeht.

### Bezugszeichenliste

- 1: Sprühdüse
- 2: Zulaufrohr
- 2A: Flüssigkeitskanal
- 3a: Anschluss
- 3b: Anschluss
- 4a: Feuerwehrschlauch
- 4b: Feuerwehrschlauch
- 5: Gestell
- 6a: erste Strebe
- 6b: zweite Strebe
- 8: Stützfuß
- 8a: Mittelabschnitt
- 8b: Endabschnitt
- 9: Hülse
- 10: Klemm- oder Arretiermittel
- 11: Ventil
- 12: Basis
- 12a: Mittelabschnitt
- 12b: Endabschnitt
- 13: Klemm- oder Arretiermittel
- 15: Oberseite
- 16: Unterseite
- 17: Lager
- 18: Seil oder Kette
- 19: Aufhängung
- 20: Klemm- oder Arretiermittel

- A: Achse
- B: Strömungsachse

## Patentansprüche

1. Vorrichtung zur Flüssigkeitsverteilung, mit einer um eine vertikale Achse (A) dreh- oder schwenkbaren Sprühdüse (1), einem zu der Sprühdüse führenden, einen Flüssigkeitskanal (2A) für die Flüssigkeitsversorgung der Sprühdüse (1) umschließenden, vertikalen Zulaufrohr (2), einem mit dem Zulaufrohr (2) verbindbaren Anschluss (3a), welcher zur flüssigkeitsdichten Kopplung mit einem Feuerwehrschlauch (4a) ausgebildet ist, und einem Gestell (5) aus gegen das Zulaufrohr (2) abgestützten Streben (6a,6b), **dadurch gekennzeichnet, dass** eine erste Strebe (6a) des Gestells (5) in einer ersten Richtung gegen das Zulaufrohr (2) abgestützt ist, dass eine zweite Strebe (6b) des Gestells (5) in einer zweiten Richtung, welche entgegengesetzt der ersten Richtung ist, gegen das Zulaufrohr (2) abgestützt ist, und dass die Strömungsachse (B) des Anschlusses (3a) horizontal in einer Achsrichtung quer zu der ersten und der zweiten Richtung verläuft und dass weitere, in andere Richtungen stützende Streben nicht vorhanden sind.

2. Vorrichtung nach Anspruch 1, **dadurch gekennzeichnet, dass** die Streben (6a,6b) an ihren dem Zulaufrohr (2) abgewandten Enden mit verbreiterten Stützfüßen (8) versehen sind.

3. Vorrichtung nach Anspruch 2, **dadurch gekennzeichnet, dass** die Unterseite der Stützfüße (8) in Richtung parallel zu der Strömungsachse (B) schlittenförmig verlaufen mit einem Mittelabschnitt (8a), der zu den Enden hin in nach oben gebogene Endabschnitten (8b) übergeht.

4. Vorrichtung nach einem der vorhergehenden Ansprüche, **gekennzeichnet durch** einen zweiten, zur flüssigkeitsdichten Kopplung mit einem weiteren Feuerwehrschlauch (4b) ausgebildeten Anschluss (3b), welcher identisch zu dem Anschluss (3a) gestaltet ist, mit dem Anschluss (3a) strömungsverbunden und diesem abgewandt angeordnet ist.

5. Vorrichtung nach Anspruch 4, **dadurch gekennzeichnet, dass** die Strömungsachsen (B) der beiden Anschlüsse (3a,3b) zueinander fluchten.

6. Vorrichtung nach einem der vorhergehenden Ansprüche, **gekennzeichnet durch** eine auf dem Zulaufrohr (2) höhenbeweglich angeordnete Hülse (9), gegen die die erste und zweite Strebe (6a,6b) mit jeweils einem Ende abgestützt und an der die Streben (6a,6b) in der Vertikalen schwenkbar gelagert sind.

7. Vorrichtung nach Anspruch 6, **gekennzeichnet durch** Klemm- oder Arretiermittel (10) zum Fixieren der Höhe der Hülse (9) am Zulaufrohr (2).

8. Vorrichtung nach einem der vorhergehenden Ansprüche, **gekennzeichnet durch** ein Ventil (11) zum wahlweisen Öffnen oder Sperren des Flüssigkeitskanals (2A).

9. Vorrichtung nach Anspruch 8, **dadurch gekennzeichnet, dass** das Ventil (11) Bestandteil des vertikalen Zulaufrohrs (2) ist.

10. Vorrichtung nach einem der vorhergehenden Ansprüche, **dadurch gekennzeichnet, dass** das Zulaufrohr (2) an einer Basis (12) angeordnet ist.

11. Vorrichtung nach Anspruch 10, **dadurch gekennzeichnet, dass** das Zulaufrohr (2) seitlich verschwenkbar auf der Basis (12) in Bezug auf die Strömungsachse (B) des oder der Anschlüsse (3a,3b) gelagert ist.

12. Vorrichtung nach Anspruch 11, **gekennzeichnet durch** Klemm- oder Arretiermittel (13), die dazu ausgebildet sind, die Schwenkposition des Zulaufrohrs (2) gegenüber der Basis (12) festzulegen.

13. Vorrichtung nach Anspruch 11 oder 12, **dadurch gekennzeichnet, dass** die Basis (12) als eine Platte mit einer Oberseite (15) und einer Unterseite (16) ausgebildet ist, wobei auf der Oberseite (15) zwei Lagerungen (17) mit Öffnungen koaxial zu der Strömungsachse (B) ausgebildet sind.

14. Vorrichtung nach Anspruch 10 bis 13, **dadurch gekennzeichnet, dass** die Unterseite der Basis (12) in Richtung parallel zu der Strömungsachse (B) schlittenförmig verlaufen mit einem Mittelabschnitt (12a), der zu den Enden hin in nach oben gebogene Endabschnitte (12b) übergeht.

15. Vorrichtung nach einem der vorhergehenden Ansprüche, dadurch genkennzeichnet, dass zur Schwenkbegrenzung der Streben (6a,6b) ein Seil oder eine Kette (18) einerseits an der jeweiligen Strebe (6a,6b), und andererseits an mindestens einer Aufhängung (19) an der Basis (12) befestigt ist.

## Claims

1. Device for distributing liquid, having a spray nozzle (1) which is rotatable or pivotable about a vertical axis (A), a vertical feed pipe (2) which leads to the spray nozzle and encloses a liquid duct (2A) for supplying the spray nozzle (1) with liquid, a connector (3a) which is connectable to the feed pipe (2) and is configured to be coupled in a fluid-tight manner to a fire hose (4a), and a frame (5) of struts (6a, 6b) which are supported in relation to the feed pipe (2), **characterized in that** a first strut (6a) of the frame (5) is supported in relation to the feed pipe (2) in a first direction, **in that** a second strut (6b) of the frame (5) is supported in relation to the feed pipe (2) in a second direction which is counter to the first direction, and **in that** the flow axis (B) of the connector (3a) runs horizontally in an axial direction that is transverse to the first and the second direction, and **in that** other struts supporting in other directions are not present.

2. Device according to Claim 1, **characterized in that** the struts (6a, 6b) on their ends facing away from the feed pipe (2) are provided with widened support feet (8) .

3. Device according to Claim 2, **characterized in that** the lower sides of the support feet (8) have a sled-shape profile in the direction parallel to the flow axis (B), and have a central portion (8a) which towards the ends transitions into upwardly curved end portions (8b) .

4. Device according to one of the preceding claims, **characterized by** a second connector (3b) which is configured to be coupled in fluid-tight manner to a further fire hose (4b) and is of identical design as the connector (3a), is fluidically connected to the connector (3a) and disposed so as to face away therefrom.

5. Device according to Claim 4, **characterized in that** the flow axes (B) of the two connectors (3a, 3b) are co-aligned.

6. Device according to one of the preceding claims, **characterized by** a sleeve (9) which is disposed so as to be movable in terms of height on the feed pipe (2), the first and the second strut (6a, 6b) being in each case supported in relation to said sleeve (9) by way of one end, and the struts (6a, 6b) being mounted on said sleeve (9) so as to be vertically pivotable.

7. Device according to Claim 6, **characterized by** clamping or locking means (10) for fixing the height of the sleeve (9) on the feed pipe (2).

8. Device according to one of the preceding claims, **characterized by** a valve (11) for selectively opening or blocking the liquid duct (2A).

9. Device according to Claim 8, **characterized in that** the valve (11) is a constituent part of the vertical feed pipe (2).

10. Device according to one of the preceding claims, **characterized in that** the feed pipe (2) is disposed on a base (12).

11. Device according to Claim 10, **characterized in that** the feed pipe (2) is mounted on the base (12) so as to be laterally pivotable relative to the flow axis (B) or the connector or connectors (3a, 3b).

12. Device according to Claim 11, **characterized by** clamping or locking means (13) which are configured to establish the pivoted position of the feed pipe (2) relative to the base (12).

13. Device according to Claim 11 or 12, **characterized in that** the base (12) is configured as a plate having an upper side (15) and a lower side (16), wherein two mounts (17) having openings which are coaxial with the flow axis (B) are formed on the upper side (15).

14. Device according to Claims 10 to 13, **characterized in that** the lower side of the base (12) has a sled-shape profile in the direction parallel to the flow axis (B), and has a central portion (12a) which towards the ends transitions into upwardly curved end portions (12b) .

15. Device according to one of the preceding claims, **characterized in that**, for delimiting the pivoting movement of the struts (6a, 6b), a rope or a chain (18) is fastened to the respective strut (6a, 6b), on the one hand, and to at least one suspension (19) on the base (12), on the other hand.

## Revendications

1. Dispositif de distribution de liquide, avec une buse de pulvérisation (1) pouvant tourner ou pivoter autour d'un axe vertical (A), un tube d'arrivée vertical (2) menant à la buse de pulvérisation, entourant un canal de liquide (2A) pour l'alimentation en liquide de la buse de pulvérisation (1), un raccord (3a) pouvant être relié au tube d'arrivée (2), qui est réalisé pour être couplé de manière étanche aux liquides à un tuyau d'incendie (4a), et un châssis (5) composé d'entretoises (6a, 6b) s'appuyant contre le tube d'arrivée (2), **caractérisé en ce qu'**une première entretoise (6a) du châssis (5) s'appuie dans une première direction contre le tube d'arrivée (2), **en ce qu'**une deuxième entretoise (6b) du châssis (5) s'appuie dans une deuxième direction, qui est opposée à la première direction, contre le tube d'arrivée (2), et **en ce que** l'axe d'écoulement (B) du raccord (3a) s'étend horizontalement dans une direction axiale transversale à la première et à la deuxième direction, et **en ce qu'**il n'y a pas d'autres entretoises s'appuyant dans d'autres directions.

2. Dispositif selon la revendication 1, **caractérisé en ce que** les entretoises (6a, 6b) sont munies de pieds d'appui élargis (8) à leurs extrémités détournées du tube d'arrivée (2).

3. Dispositif selon la revendication 2, **caractérisé en ce que** le côté inférieur des pieds d'appui (8) s'étend dans la direction parallèle à l'axe d'écoulement (B) en forme de chariot avec une section centrale (8a) qui se transforme vers les extrémités en des sections d'extrémité (8b) courbées vers le haut.

4. Dispositif selon l'une quelconque des revendications précédentes, **caractérisé par** un deuxième raccord (3b) réalisé pour être couplé de manière étanche aux liquides à un autre tuyau d'incendie (4b), lequel est conçu sous forme identique au raccord (3a), est en liaison d'écoulement avec le raccord (3a) et est agencé détourné de celui-ci.

5. Dispositif selon la revendication 4, **caractérisé en ce que** les axes d'écoulement (B) des deux raccords (3a, 3b) sont alignés l'un avec l'autre.

6. Dispositif selon l'une quelconque des revendications précédentes, **caractérisé par** un manchon (9) agencé sur le tube d'arrivée (2) de manière à pouvoir se déplacer en hauteur, contre lequel la première et la deuxième entretoise (6a, 6b) s'appuient chacune par une extrémité et sur lequel les entretoises (6a, 6b) sont montées de manière à pouvoir pivoter verticalement.

7. Dispositif selon la revendication 6, **caractérisé par** des moyens de serrage ou de blocage (10) pour fixer la hauteur du manchon (9) sur le tube d'arrivée (2).

8. Dispositif selon l'une quelconque des revendications précédentes, **caractérisé par** une soupape (11) permettant d'ouvrir ou de fermer sélectivement le canal de liquide (2A).

9. Dispositif selon la revendication 8, **caractérisé en ce que** la soupape (11) fait partie intégrante du tube d'arrivée vertical (2).

10. Dispositif selon l'une quelconque des revendications précédentes, **caractérisé en ce que** le tube d'arrivée (2) est agencé sur une base (12).

11. Dispositif selon la revendication 10, **caractérisé en ce que** le tube d'arrivée (2) est monté de manière à pouvoir pivoter latéralement sur la base (12) par rapport à l'axe d'écoulement (B) du ou des raccords (3a, 3b).

12. Dispositif selon la revendication 11, **caractérisé par** des moyens de serrage ou de blocage (13) qui sont réalisés pour immobiliser la position de pivotement du tube d'arrivée (2) par rapport à la base (12).

13. Dispositif selon la revendication 11 ou 12, **caractérisé en ce que** la base (12) est réalisée sous la forme d'une plaque avec un côté supérieur (15) et un côté inférieur (16), deux paliers (17) avec des ouvertures coaxiales à l'axe d'écoulement (B) étant réalisés sur le côté supérieur (15).

14. Dispositif selon les revendications 10 à 13, **caractérisé en ce que** le côté inférieur de la base (12) s'étend en forme de chariot dans la direction parallèle à l'axe d'écoulement (B), avec une section centrale (12a) qui se transforme vers les extrémités en des sections d'extrémité (12b) courbées vers le haut.

15. Dispositif selon l'une quelconque des revendications précédentes, **caractérisé en ce que**, pour limiter le pivotement des entretoises (6a, 6b), un câble ou une chaîne (18) est fixé d'une part à l'entretoise (6a, 6b) respective, et d'autre part à au moins une suspension (19) sur la base (12).
